# EUROPÄISCHE PATENTSCHRIFT

(11) **EP 3 671 060 B1**
(45) Veröffentlichungstag und Bekanntmachung des Hinweises auf die Patenterteilung: **07.06.2023**
(21) Anmeldenummer: 19202677.1
(22) Anmeldetag: 11.10.2019
(51) Int. Cl.: F24H 9/20, F24H 4/04, F24D 19/10, F24H 7/00, C02F 1/02

(54) **WARMWASSERVORRICHTUNG**
HOT WATER DEVICE
DISPOSITIF D'EAU CHAUDE

(30) Priorität: 21.12.2018 DE 102018133545
(43) Veröffentlichungstag der Anmeldung: 24.06.2020
(73) Patentinhaber: Stiebel Eltron GmbH & Co. KG, 37603 Holzminden (DE)
(72) Erfinder: Brugmann, Johannes, 37671 Höxter (DE); Schaumlöffel, Michael, 37671 Höxter (DE)

(56) Entgegenhaltungen:
- EP-A2- 2 667 104
- DE-A1- 19 524 079
- DE-B4- 19 524 079
- JP-A- 2015 206 496
- Anonymous: "Technische Regeln fur Trinkwasser-lnstallationen - Teil 200: Installation Typ A (geschlossenes System) Planung, Bauteile, Apparate, Werkstoffe; Technische Regel des DVGW", DIN 1988-200, 1. Mai 2012 (2012-05-01), Seiten 1-51, XP055513768, Gefunden im Internet: URL:a [gefunden am 2018-10-09]

## Beschreibung

Die vorliegende Erfindung betrifft eine Warmwasservorrichtung, insbesondere eine Wärmepumpe.

Bei Warmwasservorrichtungen mit Warmwasserspeichern ist zur Gewährleistung einer hygienischen Warmwasserversorgung eine Mindesttemperatur des Wassers am Wasseraustritt zu gewährleisten. Die DVGW-Richtlinie W551 und die DIN 1988 fordern beispielsweise eine Mindesttemperatur von 60 °C am Wasseraustritt. Die DIN 1988 lässt jedoch eine niedrigere Warmwassertemperatur zu, wenn ein vollständiger Wasseraustausch im Warmwasserspeicher innerhalb von 3 Tagen sichergestellt ist. Demnach ist die Temperatur auf 50 °C einzustellen, wenn innerhalb von 72 Stunden ein vollständiger Wasseraustausch in dem Warmwasserspeicher stattgefunden hat. Eine Temperatur von größer 60 °C ist hingegen einzustellen, wenn kein vollständiger Wasseraustausch innerhalb von 72 Stunden erfolgt.

Die EP 2 667 104 A2 beschreibt beispielsweise eine Anlage zur Erwärmung von Trinkwasser, die eine Soll-Entnahmemenge an Trinkwasser mit einer Ist-Entnahmemenge an Trinkwasser vergleicht, und in Abhängigkeit der Abweichung der Soll-Entnahmemenge von der Ist-Entnahmemenge die Temperatur im Warmwasserspeicher regelt. Hierfür wird die entnommene Wassermenge, bzw. das entnommene Wasservolumen, unmittelbar gemessen. Die vorgestellte Anlage zur Erwärmung von Trinkwasser erfordert neben einem Temperaturmessgerät zusätzlich einen Massen- und/oder Volumenstrommesser, um die Menge und/oder das Volumen des entnommenen Trinkwassers zu bestimmen. Dieser Aufbau der Anlage ist technisch aufwendig. Daher ist die Anlage technisch anfällig und darüber hinaus wartungsintensiv.

Es ist daher eine Aufgabe der vorliegenden Erfindung, eine Warmwasservorrichtung, insbesondere eine Wärmepumpe, bereitzustellen, welche eine oder mehrere der genannten Nachteile vermindert oder beseitigt. Insbesondere ist es eine Aufgabe der Erfindung, eine einfachere und/oder nachrüstbare Lösung bereitzustellen, die eine Wassertemperatur innerhalb der Warmwasservorrichtung in Abhängigkeit der entnommenen Wassermenge regelt, bzw. steuert.

Diese Aufgabe wird durch eine Warmwasservorrichtung nach Anspruch 1 gelöst.

Die Erfindung betrifft den Gedanken, eine Warmwasservorrichtung, insbesondere eine Wärmepumpe, vorzusehen, die einen Warmwasserspeicher mit einem Speichervorlumen aufweist. Das Speichervolumen entspricht im Wesentlichen einem Füllvolumen des Warmwasserspeichers. Der Warmwasserspeicher umfasst den Wassereintritt und den Wasseraustritt. Der Wassereintritt ist vorzugsweise an einem unteren Ende des Warmwasserspeichers angeordnet. Der Wasseraustritt ist vorzugsweise an einem oberen Ende des Warmwasserspeichers angeordnet.

Der Warmwasserspeicher umfasst ferner die Messeinheit zur Ermittlung einer Temperatur. Insbesondere ist es bevorzugt, dass die Messeinheit als Temperaturfühler ausgebildet ist. Darüber hinaus kann die Messeinheit zur Ermittlung eines Temperaturabfalls und/oder eines Temperaturgradienten ausgebildet sein.

Vorzugsweise sind der Wassereintritt und der Wasseraustritt derart ausgebildet, dass das Speichervolumen des Warmwasserspeichers im Wesentlichen stets mit Wasser gefüllt ist. Die Wärmeübertragung auf das Wasser kann innerhalb des Warmwasserspeichers, beispielsweise mittels eines Rohrwärmetauschers, oder außerhalb des Warmwasserspeichers, beispielsweise mittels eines Plattenwärmeaustauschers, erfolgen.

Der Erfindung liegt unter anderem die Erkenntnis zugrunde, dass Temperaturabfälle innerhalb eines Warmwasserspeichers unterschiedliche Ursachen haben können. Diese sind beispielsweise die Zapfung von Trinkwasser, Wärmeverluste durch die Speicheroberfläche, Zirkulation, thermische Leitung über Rohranbindungen und Fehlzirkulationen. Die Zapfung von Trinkwasser unterscheidet sich von den anderen Ursachen dahingehend, dass der Temperaturabfall schnell und/oder der Temperaturgradient besonders deutlich ausgebildet ist bzw. sind. Infolgedessen ist über einen solchen Temperaturabfall die Zapfung von Trinkwasser zu detektieren. Die weiteren im Vorherigen beschriebenen Ursachen zeichnen sich durch einen langsamen Temperaturabfall aus.

Der Erfindung liegt weiterhin die Erkenntnis zugrunde, dass sich im Speicher eine Schichtung ausbildet, sofern die Zuströmung von Kaltwasser impulsarm erfolgt. Im oberen Bereich des Speichers bleibt das Warmwasser, das sich durch die oben beschriebenen langsamen Vorgänge abkühlt, um unteren Bereich befindet sich das zugeströmte Kaltwasser, welches das gezapfte Warmwasser ersetzt. Dazwischen befindet sich eine Mischzone, die etwa 50-200mm hoch ist.

Aus dem oben beschriebenen schnelleren Temperaturabfall wird erfindungsgemäß ein Zapfereignis bestimmt. Einem Zapfereignis wird erfindungsgemäß ein definiertes Referenzvolumen zugeordnet. Das Referenzvolumen ist vorzugsweise das Volumen, das unterhalb der Stelle der Anordnung der Messeinheit innerhalb des Warmwasserspeichers herrscht. Dieses Volumen ist in der Regel kleiner als das tatsächlich entnommene Zapfvolumen. Aufgrund dessen kann das Referenzvolumen zur Bestimmung der einzustellenden Solltemperatur herangezogen werden.

Insbesondere wird die Anzahl der Zapfereignisse in einer vorbestimmten Zeitspanne mit dem Referenzvolumen multipliziert. Das Multiplikationsergebnis ist vorzugsweise ein Referenzzapfvolumen. Wenn das Referenzzapfvolumen größer ist als das Speichervolumen, wird die erste Solltemperatur eingestellt, da das tatsächlich gezapfte Wasservolumen größer ist als das Speichervolumen. Wenn das Referenzzapfvolumen in der vorbestimmten Zeitspanne geringer ist als das Speichervolumen, wird die zweite Solltemperatur eingestellt, da das tatsächlich gezapfte Wasservolumen geringer als das Speichervolumen sein kann.

Weitere Ausgestaltungen der Erfindung sind Gegenstand der Unteransprüche.

Vorteile und Ausführungsbeispiele der Erfindung werden nachstehend unter Bezugnahme auf die Zeichnungen näher erläutert.

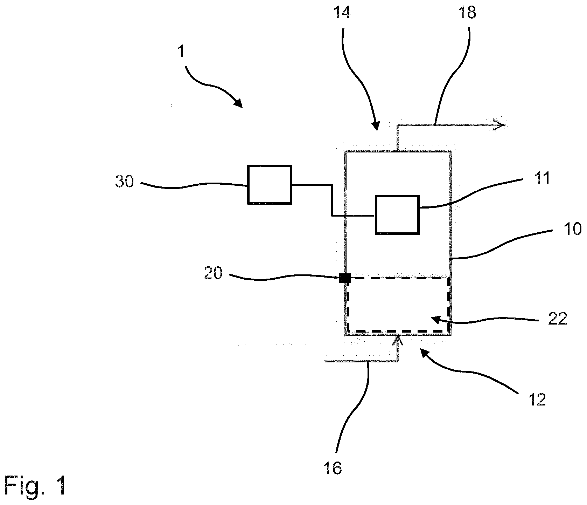

- Fig. 1:: zeigt eine schematische Schnittansicht einer Warmwasservorrichtung; und
- Fig. 2:: zeigt ein schematisches Diagramm eines Temperaturverlaufs an einer Stelle eines Warmwasserspeichers.

Die Warmwasservorrichtung 1 weist einen Warmwasserspeicher 10 mit einem Wärmeübertrager 20 auf. Der Warmwasserspeicher 10 erstreckt sich in vertikaler Richtung von einem unteren Ende 12 zu einem oberen Ende 14. An dem unteren Ende 12 ist ein Wassereintritt 16 angeordnet, wobei durch den Wassereintritt 16 Wasser in den Warmwasserspeicher 10 eintreten kann. An dem oberen Ende 14 ist ein Wasseraustritt 18 angeordnet, wobei durch den Wasseraustritt 18 Wasser aus dem Warmwasserspeicher 10 austreten kann.

An dem Warmwasserspeicher 10 ist eine Messeinheit 11 angeordnet, die vorzugsweise als Temperaturfühler ausgebildet ist. Die Messeinheit 11 ist derart angeordnet und ausgebildet, dass diese die Temperatur des Wassers in dem Warmwasserspeicher 10 an einer definierten Stelle messen kann. Die definierte Stelle der Messeinheit 11 ist derart verortet, dass diese eine vertikale Beabstandung von dem unteren Ende 12 aufweist. Durch die vertikale Beabstandung der Stelle der Messeinheit 11 von dem unteren Ende 12 wird ein Referenzvolumen 22 definiert, das dem Volumen des Warmwasserspeichers 10 unterhalb der Höhe der Stelle der Messeinheit 20 entspricht.

Ferner weist die Warmwasservorrichtung 1 eine Steuereinheit 30 auf, der Messeinheit 11 , vorzugsweise signaltechnisch gekoppelt ist.

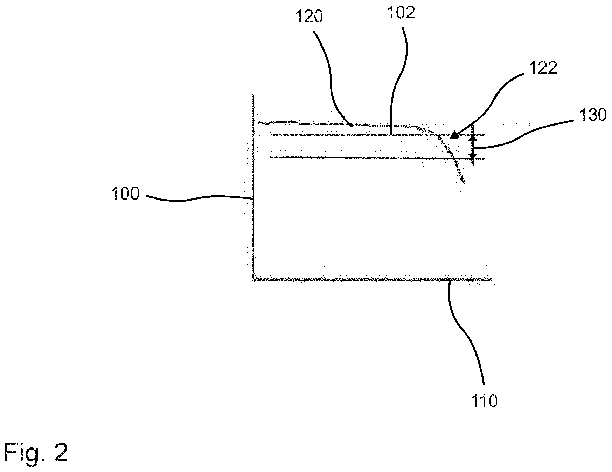

Das schematische Diagramm in Fig. 2 weist eine Temperaturachse 100 und eine Zeitachse 110 auf. Als Konstante ist in dem Diagramm die erste Solltemperatur 102 aufgetragen. Ferner ist ein exemplarischer Temperaturverlauf 120 gezeigt. Der Temperaturverlauf 120 zeigt in einem Zeitabschnitt einen schnelleren Temperaturabfall 130.

Ein solcher Temperaturabfall 130 in einem Zeitintervall 140 ist ein Zapfereignis 122. Das heißt, dass in diesem Zeitabschnitt Wasser aus dem Wasseraustritt 18 entnommen wurde und Wasser durch den Wassereintritt 16 in den Warmwasserspeicher 10 eintritt. Da das eintretende Wasser in der Regel eine geringere Temperatur aufweist als das Wasser innerhalb des Warmwasserspeichers 10, verschiebt sich die Mischzone im Warmwasserspeicher 10 nach oben. Erreicht die Mischzone die Messeinheit 11, wird ein Temperaturabfall 130 ermittelt, ist dieser ausreichend schnell und groß charakterisiert dies ein Zapfereignis 122. Infolgedessen wird das Referenzvolumen 22 als gezapftes Volumen gewertet. Wird durch genügend viele Zapfereignisse 122 innerhalb der vorbestimmten Zeitspanne eine Summe an Referenzvolumina 22 erreicht, die größer ist als das Speichervolumen der Warmwasserspeichers 10, wird die erste Solltemperatur 102 eingestellt. Ist diese Summe kleiner als das Speichervolumen des Warmwasserspeichers 10 wird die zweite, höhere Solltemperatur 103 eingestellt. Die erste, niedrigere Solltemperatur 102 wird unmittelbar nach Erreichen der höheren Solltemperatur wiedereingestellt und das Referenzvolumen 22 als vollständig gewertet. Die Einstellung der ersten Solltemperatur 102 und der zweiten Solltemperatur 103 erfolgt durch die Steuerung des Wärmeübertragers 11 mit der Steuereinheit 30. In der Steuereinheit 30 können auch Zeitprogramme mit unterschiedlichen ersten Solltemperaturen 102 hinterlegt sein. Für die Ermittlung des Temperaturabfalls wird vorzugsweise die niedrigste der ersten Solltemperaturen 102 verwendet.

Die Bestimmung, ob eine erste Solltemperatur 102 oder eine zweite, höhere Solltemperatur 103 eingestellt werden soll, erforderte in der Vergangenheit regelmäßig die Nachrüstung des Warmwasserspeichers mit Durchflusssensoren. Mittels des Durchflusssensors wurde das einströmende Wasservolumen innerhalb von 72 Stunden gemessen und unmittelbar auf Basis dieses Wasservolumens die Entscheidung getroffen, ob eine hohe Temperatur oder eine niedrige Temperatur einzustellen ist.

Die vorliegende Erfindung erfordert hingegen lediglich eine Rekonfiguration der ohnehin vorhandenen Steuereinheit. In moderneren Steuereinheiten erfordert dies lediglich ein Software-Upgrade. Die Warmwasservorrichtung kann somit mit einfachsten Mitteln, beispielsweise während einer möglicherweise ohnehin erforderlichen Wartung, auf einen modernen Standard gebracht werden. Darüber hinaus sind neu hergestellte Warmwasservorrichtungen durch das Fehlen von Durchflusssensoren robuster ausgebildet und günstiger herstellbar.

### BEZUGSZEICHEN

- 1: Warmwasservorrichtung
- 10: Warmwasserspeicher
- 11: Messeinheit
- 12: unteres Ende
- 14: oberes Ende
- 16: Wassereintritt
- 18: Wasseraustritt
- 20: Wärmeübertrager
- 22: Referenzvolumen
- 30: Steuereinheit
- 100: Temperaturachse
- 102: erste Solltemperatur
- 103: zweite Solltemperatur
- 110: Zeitachse
- 120: Temperaturverlauf
- 122: Zapfereignis
- 130: Temperaturabfall
- 140: Zeitintervall

## Patentansprüche

1. Warmwasservorrichtung (1), insbesondere eine Wärmepumpe, umfassend
- einen Warmwasserspeicher (10) mit einem Speichervolumen und einer Messeinheit (11), insbesondere einem Temperaturfühler, zur Ermittlung einer Temperatur an einer Stelle innerhalb des Warmwasserspeichers (10), wobei der Warmwasserspeicher (10) einen Wassereintritt (16) und einen Wasseraustritt (18) aufweist, wobei bei und/oder nach Entnahme eines Zapfvolumens aus dem Wasseraustritt ein Zuflussvolumen durch den Wassereintritt in den Warmwasserspeicher (10) fließen kann,
- einen Wärmeübertrager (20) zur Erwärmung von Wasser in dem Warmwasserspeicher (10), und
- eine Steuereinheit (30), die eingerichtet ist,
- den Wärmeübertrager (20) derart zu steuern, dass das Wasser in dem Warmwasserspeicher (10) eine erste Solltemperatur (102) oder eine zweite Solltemperatur (103) aufweist, wobei die erste Solltemperatur niedriger ist als die zweite Solltemperatur,
- Zapfereignisse (122) zu bestimmen, wobei
- ein Zapfereignis (122) auf Basis eines ermittelten Temperaturabfalls (130) bestimmt wird,
- einem Zapfereignis (122) ein vordefiniertes Referenzvolumen (22) zugeordnet ist,
- die erste Solltemperatur (102) einzustellen, wenn die summierten Referenzvolumina (22) der Zapfereignisse (122) in einer vorbestimmten Zeitspanne größer sind als das Speichervolumen, und
- die zweite Solltemperatur (103) einzustellen, wenn die summierten Referenzvolumina (22) der Zapfereignisse (122) in der vorbestimmten Zeitspanne kleiner sind als das Speichervolumen.

2. Warmwasservorrichtung (1) nach Anspruch 1, wobei die Messeinheit (11) mehrere mehrere in unterschiedlicher Höhe angeordnete Temperatursensoren aufweist, mit denen das gezapfte Volumen genauer erfasst werden kann.

3. Warmwasservorrichtung (1) nach Anspruch 1, wobei die Messeinheit einen Integralsensor aufweist, wobei der Integralsensor dazu ausgebildet ist, die Wärmemenge und das gezapfte Volumen erfasst werden kann.

4. Warmwasservorrichtung (1) nach einem der vorhergehenden Ansprüche, wobei die erste Solltemperatur (102) unter 60°C liegt, und vorzugsweise zwischen 50°C und 60°Cliegt.

5. Warmwasservorrichtung (1) nach einem der vorhergehenden Ansprüche, wobei die zweite Solltemperatur (103) über 60°C liegt.

6. Warmwasservorrichtung (1) nach einem der vorhergehenden Ansprüche, wobei der Warmwasserspeicher (10) Massenstromsensor-frei und/oder Volumenstromsensorfrei ausgebildet ist.

7. Warmwasservorrichtung (1) nach einem der vorhergehenden Ansprüche, wobei der Temperaturabfall (130) aus der Differenz der ersten Solltemperatur (102) und einer Ist-Temperatur (120) ermittelt wird.

8. Warmwasservorrichtung (1) nach einem der vorhergehenden Ansprüche, wobei die vorbestimmte Zeitspanne zwischen 24 Stunden und 168 Stunden, vorzugsweise zwischen 70 Stunden und 75 Stunden, insbesondere 72 Stunden beträgt.

## Claims

1. A hot water apparatus (1), in particular a heat pump, comprising
- a hot water storage tank (10) having a storage capacity and a measuring unit (11), in particular a temperature sensor, for determining a temperature at a location within the hot water storage tank (10), the hot water storage tank (10) having a water inlet (16) and a water outlet (18), wherein upon and/or following removal of a draw-off volume from the water outlet an inflow volume can flow through the water inlet into the hot water storage tank (10),
- a heat exchanger (20) for heating water in the hot water storage tank (10), and
- a control unit (30) that is arranged to
- control the heat exchanger (20) such that the water in the hot water storage tank (10) has a first set temperature (102) or a second set temperature (103), wherein the first set temperature is lower than the second set temperature,
- identify draw-off events (122), wherein
- a draw-off event (122) is identified on the basis of a determined temperature drop (130),
- a predefined reference volume (22) is assigned to a draw-off event (122),
- to set the first set temperature (102) if, in a predetermined period of time, the summed reference volumes (22) of the draw-off events (122) are greater than the storage tank volume, and
- to set the second set temperature (103) if, in the predetermined period of time, the summed reference volumes (22) of the draw-off events (122) are less than the storage tank volume.

2. The hot water apparatus (1) according to Claim 1, wherein the measuring unit (11) has multiple temperature sensors disposed at different levels, with which the drawn-off volume can be detected more accurately.

3. The hot water apparatus (1) according to Claim 1, wherein the measuring unit has an integral sensor, wherein the integral sensor is configured to detect the heat amount and the drawn-off volume.

4. The hot water apparatus (1) according to one of the preceding claims, wherein the first set temperature (102) is below 60 °C and preferably between 50 °C and 60 °C.

5. The hot water apparatus (1) according to one of the preceding claims, wherein the second set temperature (103) is above 60 °C.

6. The hot water apparatus (1) according to one of the preceding claims, wherein the hot water storage tank (10) is configured without a mass flow sensor and/or without a volume flow sensor.

7. The hot water apparatus (1) according to one of the preceding claims, wherein the temperature drop (130) is determined from the difference of the first set temperature (102) and an actual temperature (120).

8. The hot water apparatus (1) according to one of the preceding claims, wherein the predetermined period of time is between 24 hours and 168 hours, preferably between 70 hours and 75 hours, in particular 72 hours.

## Revendications

1. Dispositif à eau chaude (1), en particulier pompe à chaleur, comprenant
- un ballon d'eau chaude (10) doté d'un volume de stockage et d'un module de mesure (11), en particulier une sonde de température, permettant de déterminer la température en un point situé à l'intérieur du ballon d'eau chaude (10), le ballon d'eau chaude (10) présentant une entrée d'eau (16) et une sortie d'eau (18), un volume d'arrivée pouvant s'écouler par l'entrée d'eau dans le ballon d'eau chaude (10) pendant et/ou après le prélèvement d'un volume de soutirage à la sortie d'eau,
- un échangeur de chaleur (20) destiné à chauffer l'eau dans le ballon d'eau chaude (10) et
- un module de commande (30) configuré pour
- commander l'échangeur de chaleur (20) de telle manière que l'eau située dans le ballon d'eau chaude (10) présente une première température de consigne (102) ou une seconde température de consigne (103), la première température de consigne étant inférieure à la seconde température de consigne,
- identifier des événements de soutirage (122), étant entendu que
- un événement de soutirage (122) est identifié en fonction d'une chute de température (130) déterminée,
- un volume de référence (22) prédéfini est associé à événement de soutirage (122),
- régler la première température de consigne (102) quand les volumes de référence (22) additionnés des événements de soutirage (122) pendant un laps de temps prédéterminé sont supérieurs au volume de stockage et
- régler la seconde température de consigne (103) quand les volumes de référence (22) additionnés des événements de soutirage (122) pendant le laps de temps prédéterminé sont inférieurs au volume de stockage.

2. Dispositif à eau chaude (1) selon la revendication 1, dans lequel le module de mesure (11) présente plusieurs capteurs de température disposés à différentes hauteurs, avec lesquels le volume soutiré peut être détecté plus précisément.

3. Dispositif à eau chaude (1) selon la revendication 1, dans lequel le module de mesure présente une sonde intégrale, la sonde intégrale étant conçue pour détecter la quantité de chaleur et le volume soutiré.

4. Dispositif à eau chaude (1) selon l'une quelconque des revendications précédentes, dans lequel la première température de consigne (102) est inférieure à 60 °C et est de préférence comprise entre 50 °C et 60 °C.

5. Dispositif à eau chaude (1) selon l'une quelconque des revendications précédentes, dans lequel la seconde température de consigne (103) est supérieure à 60 °C.

6. Dispositif à eau chaude (1) selon l'une quelconque des revendications précédentes, dans lequel le ballon d'eau chaude (10) est conçu sans capteur de débit massique et/ou sans capteur de débit volumique.

7. Dispositif à eau chaude (1) selon l'une quelconque des revendications précédentes, dans lequel la chute de température (130) est déterminée à partir de la différence entre la première température de consigne (102) et une température réelle (120).

8. Dispositif à eau chaude (1) selon l'une quelconque des revendications précédentes, dans lequel le laps de temps prédéterminé est compris entre 24 heures et 168 heures, de préférence entre 70 heures et 75 heures et est en particulier de 72 heures.
